# EUROPEAN PATENT APPLICATION

(11) **EP 1 638 301 A1**
(43) Date of publication of application: **22.03.2006**
(21) Application number: 04021964.4
(22) Date of filing: 15.09.2004
(51) Int. Cl.: H04M 1/725

(54) **Mp3 personal storage device with Bluetooth module for displaying an income-call**

(71) Applicant: Partner Tech Corp., Shin Tien, Taipei (TW)
(72) Inventor: Yueh, Wen-Hsiang, Taipei Hsien Taiwan (CN)
(74) Representative: Viering, Jentschura & Partner

(57) **Abstract**

An MP3 personal storage device with income-call displaying function and having an earphone and a microphone is disclosed. The MP3 personal storage device comprises a memory control module coupled to at least one memory for storing a digital data; a signal processing module coupled to said earphone, said microphone and said memory control module for processing said digital signal; a blue tooth module coupled to said memory control module and said signal processing module for receiving a remote data signal and replying a modulation signal; a monitor coupled to said memory control module for displaying a digital data transmitted from said signal processing module.

## Description

### Field of the invention

The present invention relates to an MP3 personal storage device with income-call displaying function, more specifically, relates an MP3 player for receiving and displaying income-call.

### Background of the invention

The music file encoded in MP3 format has compact size, therefore the mp3 music file is small to store in the memory. Moreover the MP3 music was acceptable in audio quality so that could be used widely.

As the advance of semiconductor memory, the portable electronic device general has built-in memory of tens or hundreds MB, and storage capacity could be further expanded if a memory card is installed. Moreover, the functions of the portable electronic device could be enhanced by incorporating ASIC therein with specific function. For example, a pen disk drive with built-in flash memory and USB interface can store digital data from the computer.

The pen disk drive could be incorporated with built-in MP3 chip to form an MP3 personal storage device. That MP3 personal storage device could play MP3 music and store digital data from external memory card.

The blue tooth technique becomes universal, and the mobile phone usually uses a blue tooth earphone as a handfree car kit. However, the blue tooth earphone has only limited function so not to be so useful.

Therefore the inventor set the blue tooth module in the MP3 personal storage for wireless transmission so as to replaces the prior transmit line. Moreover the MP3 personal storage with built-in blue tooth module could display the income-call information on monitor of the MP3 personal storage.

### Summary of the invention

The primary object of the present invention is to incorporate the blue tooth module into an MP3 personal storage device. That MP3 personal storage device could wireless transmission with the remote electronic device such as blue tooth cell-phone, blue tooth computer and blue tooth PDA etc. so as to transmit the MP3 digital file each other. And the mp3 personal storage could display the income-call information in the monitor for let someone determining to receive yes or no.

To achieve the object mentioned above, the present invention provides a MP3 personal storage device with income-call displaying function that comprises a memory control module coupled to at least one memory for storing great digital data; a signal processing module coupled to an earphone, a microphone and a memory control module for processing digital signal; a blue tooth module coupled to said memory control module and said signal processing module for receiving a remote data signal and replying a modulation signal; and a monitor coupled to said memory control module for displaying the digital data that was transmitted from said signal processing module so as to achieve the income-call displaying.

### Brief description of the drawings

The various objects and advantages of the present invention will be more readily understood from the following detailed description when read in conjunction with the appended drawing, in which:
Fig. 1 is schematic diagram demonstrating the MP3 personal storage device of the present of the invention;
Fig. 2 is a circuit block diagram of the MP3 personal storage device with income-call displaying function according to the present of the invention.

### Detailed description of the preferred embodiment

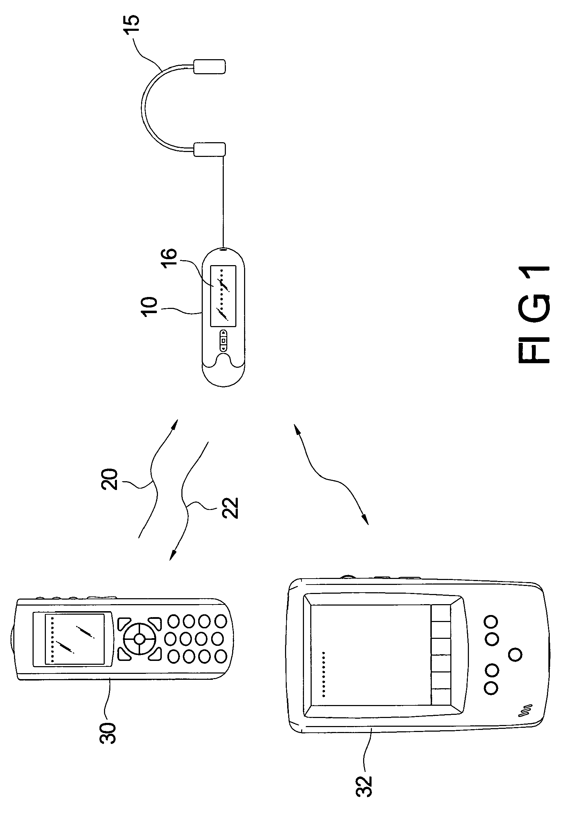

Fig. 1 shows a schematic diagram demonstrating the MP3 personal storage device of the present of the invention used with a remote electronic device. The MP3 personal storage device 10 of the present invention is coupled to an earphone for listening the MP3 music and receives a remote data signal 20 from a remote blue tooth cell-phone 30 and replies a modulation signal 22 to the remote blue tooth cell-phone 30. After the MP3 personal storage 10 of the present invention receives the remote data signal 20, the MP3 personal storage 10 displays the income-call information on a monitor 16 for informing a user. Referring to Fig. 1, the MP3 personal storage device 10 of the present invention could be communicated with a remote blue tooth electronic device 32 in wireless and digital fashion through blue tooth wireless transmission technology. More particularly, the remote blue tooth electronic device 32 is a remote storage device such as computer with blue tooth interface and blue tooth PDA, Moreover the digital data is MP3 digital file.

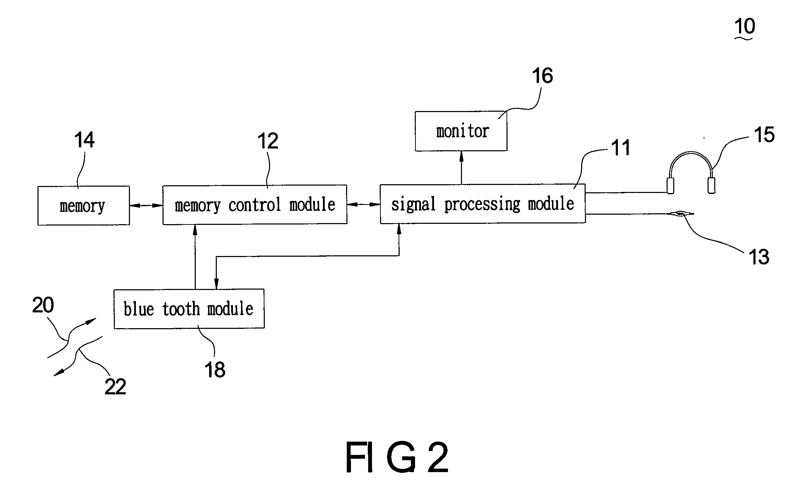

Fig. 2 is a circuit block diagram of the MP3 personal storage 10 with income-call displaying function according to the present invention. The MP3 personal storage 10 of the present invention comprises a signal processing module 11, a memory control module 12, a microphone 13, a memory 14, an earphone 15, a monitor 16 and a blue tooth module 18. The memory control module 12 is connected to at least one memory 14 for storing MP3 music data. The memory control module 12 can be a card reader and the memory 14 can be a flash memory card detachably connected to the card reader.

With reference again to Fig. 2, the signal processing module 11 is connected to the memory control module 12 and has an MP3 decoder therein and used for decoding the MP3 data in the memory 14 into audio signal. The audio signal is sent to the earphone 15 through which user can listen to the music. The content of the MP3 data in the memory 14 can also be displayed on the monitor 16, whereby user can know the content of the MP3 data in the memory 14.

With reference again to Fig. 2, the signal processing module 11 is also connected to the blue tooth module 18 and has a voice transmission and encoder/decoder unit to encode and decode voice signal and to convert between digital and analog signals. The blue tooth module 18 receives the remote data signal 20 and sends a replying modulation signal 22. The remote data signal 20 is an income-call signal.

When receiving a phone call, the blue tooth module 18 receives the remote data signal 20 and sends the remote data signal 20 to the signal processing module 11 for further processing. The remote data signal 20 is decoded by the voice transmission and encoder/decoder unit and the decoded result is displayed on the monitor 16, whereby user can know income-call information. The income voice can be heard by user through the earphone 15. In condition that the user hear MP3 file through the earphone 15, the signal processing module 11 will cease the playing of the MP3 file and switch the function of the earphone 15 to playing income conversation voice. After the conversation is over, the signal processing module 11 switches the function of the earphone 15 to broadcasting music.

When answering a phone call, the replying voice signal is sent to the transmission and encoder/decoder unit in the signal processing module 11 through the microphone 13. The transmission and encoder/decoder unit encodes the replying voice signal into a replying signal. The blue tooth module 18 sends the replying signal as replying modulation signal to the remote blue tooth cell-phone 30, as shown in Fig. 1.

Therefore, the MP3 personal storage device 10 of the present invention can perform duplex communication by the blue tooth module 18 and display the income-call information on the monitor 16, whereby the user can decide answer the phone call or not.

Fig. 1 shows a schematic diagram demonstrating the MP3 personal storage device 10 of the present of the invention used with a remote blue tooth electronic device 32. The MP3 personal storage device 10 has wireless digital data transmission with the remote blue tooth electronic device 32. The remote blue tooth electronic device 32 is a storage device and the transmitted data is MP3 data.

With reference again to Figs. 1 and 2, in the case that the remote blue tooth electronic device 32 is a storage device, the memory control module 12 has wireless transmission with the remote blue tooth electronic device 32 through the blue tooth module 18. In this case, the MP3 personal storage device 10 of the present of the invention is functioned as a flash memory device and the wireless transmitted digital data is MP3 data stored into the memory 14 to expand or update the content of MP3 data. The blue tooth module 18 is detachably connected to the signal processing module 11 and the memory control module 12 and communicates with a remote electronic device at same frequency and same channel. Therefore, the MP3 personal storage device 10 of the present of the invention can transceive digital data, MP3 data and audio data in wireless way.

To sum up, the MP3 personal storage device 10 of the present of the invention processes an MP3 data file into an audio signal by the signal processing module 11 therein. The audio signal is broadcasted to user through the earphone 15. The MP3 personal storage device 10 of the present of the invention further has duplex communication with the remote blue tooth cell-phone 30 through the blue tooth module 18. Moreover, the MP3 personal storage device 10 can also display income call information on the monitor 16 for the convenience of user.

The MP3 personal storage device 10 of the present of the invention can communicate with remote electronic device through the blue tooth module 18 connected to the memory control module 12. The blue tooth module 18 is detachably connected to the signal processing module 11 and the memory control module 12.

Although the present invention has been described with reference to the preferred embodiment thereof, it will be understood that the invention is not limited to the details thereof. Various substitutions and modifications have suggested in the foregoing description, and other will occur to those of ordinary skill in the art. Therefore, all such substitutions and modifications are intended to be embraced within the scope of the invention as defined in the appended claims.

## Claims

1. An MP3 personal storage device with income-call displaying function, which has an earphone and a microphone and comprises:
a memory control module coupled to at least one memory for storing a digital data;
a signal processing module coupled to said earphone, said microphone and said memory control module for processing said digital signal;
a blue tooth module coupled to said memory control module and said signal processing module for receiving a remote data signal and replying a modulation signal;
a monitor coupled to said memory control module for displaying a digital data transmitted from said signal processing module.

2. The MP3 personal storage device as in claim 1, wherein said memory control module is a card reader, said memory is a memory card detachably inserted to said card reader for expanding content of said memory card.

3. The MP3 personal storage device as in claim 1, wherein said memory card is a flash memory card.

4. The MP3 personal storage device as in claim 1, wherein said signal processing module comprises:
a voice transmission and encoder/decoder unit used to encode/ decode a voice and convert data between digital format and analog format;
an MP3 decoder used to decode the MP3 digital file to a voice signal for outputting to said earphone.

5. The MP3 personal storage device as in claim 1, wherein said monitor displayed a income-call signal that was produced from said voice transmission and encoder/decoder unit by decoding said remote data signal.

6. The MP3 personal storage device as in claim 1, wherein said monitor displayed a broadcast information produced after processing MP3 digital file by said signal processing module.

7. The MP3 personal storage device as in claim 1, wherein said blue tooth module is coupled to said signal processing module and wireless transmission with a blue tooth cell-phone to receive the income-call.

8. The MP3 personal storage device as in claim 1, wherein said blue tooth module is coupled to said memory control module and wireless transmission in digital data with a remote blue tooth electronic device so as to transmit data between said memory control module and said remote blue tooth electronic device.

9. The MP3 personal storage device as in claim 1, wherein said remote blue tooth electronic device is a remote storage device, and said blue tooth module wireless transmission in digital data with said remote storage device.

10. The MP3 personal storage device as in claim 1, wherein said digital data is a MP3 digital file that could be stored in said memory directly.
